# EUROPÄISCHE PATENTANMELDUNG

(11) **EP 0 986 267 A2**
(43) Veröffentlichungstag der Anmeldung: **15.03.2000**
(21) Anmeldenummer: 99112152.6
(22) Anmeldetag: 24.06.1999
(51) Int. Cl.: H04N 7/52

(54) **Verfahren zur Einbindung von audiovisueller codierter Information in einen vorgegebenen Übertragungsstandard sowie Endgeräte hierzu**

(30) Priorität: 07.09.1998 DE 19840500; 01.10.1998 DE 19845193
(71) Anmelder: ROBERT BOSCH GMBH, 70442 Stuttgart (DE)
(72) Erfinder: Moeller, Henning, 31683 Obernkirchen (DE); Vogel, Peter, 31139 Hildesheim (DE); Vollmer, Jens, 30159 Hannover (DE); Sölch, Björn, 31141 Hildesheim (DE); Bauer, Sven, 31134 Hildesheim (DE)

(57) **Zusammenfassung**

Zur Einbindung von audiovisueller codierter Information in einen vorgegebenen, rahmenstrukturierten Übertragungsstandard werden einzelne Datenströme in einen bzw. mehrere Datenkanal/- kanäle des rahmenstrukturierten Übertragungsstandards gemultiplext. Ausserdem werden die Fähigkeiten der kommunizierenden Endgeräte asgetauscht.

## Beschreibung

### Stand der Technik

Für die Übertragung von Bild- und Tondaten niedriger Bitraten für Multimedia Kommunikation wird mittels der ITU-H.324 Spezifikation "Terminal for low bitrate multimedia commmunication" ein System spezifiziert, das für Bildtelefonie-Anwendungen geeignet ist.

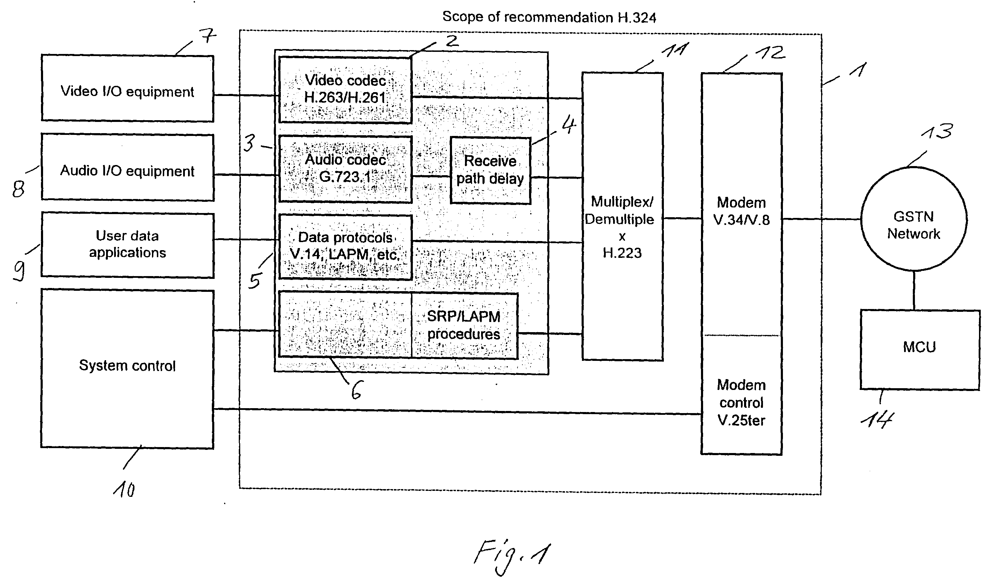

Figur 1 zeigt ein Blockschaltbild eines solchen Multimedia Systems gemäß dem Standard H.324. In dem mit Bezugszeichen 1 gekennzeichneten Block sind die Baugruppen, die in H.324 näher spezifiziert sind, untergebracht. Der Video-Codec 2 ist gemäß dem Verfahren nach ITU-H.263/H.261 ausgebildet. Dem Audio-Codec 3 gemäß ITU G.723 ist eine Verzögerungseinrichtung 4 nachgeschaltet, um evtl. zeitliche Unterschiede zwischen der Bildcodierung und Toncodierung auszugleichen. Die Einrichtung 5 dient zur Verarbeitung von Datenprotokollen, z. B. V.14 LAPM usw., und die Einrichtung 6 verarbeitet Steuerprotokolle gemäß ITU H.245. Den Codecs 2 und 3 werden über entsprechende I/O (Input/Output)-Einrichtungen 7 und 8 audiovisuelle Daten angeliefert. Die Einrichtungen zur Verarbeitung von Protokollen 5 und 6 erhalten über die Einrichtungen 9 (User Data Applications) und 10 (System Control) ihrer Eingangsdaten. Die Datenströme der Codecs 2, 3 sowie der Protokollverarbeitungseinrichtungen 5 und 6 werden über die Multiplex-/Demultiplex-Einrichtung 11 nach dem H.223 Standard zusammengeführt. Das nachgeschaltete Modem 12 liefert für die zusammengefaßten Datenströme V.34 konforme Daten und für die System-Control-Daten V.25 konforme Daten. Das Übertragungsnetz 13 schließt sich an den Block 1 an mit zugehöriger Netzsteuerung 14.

### Vorteile der Erfindung

Das Verfahren gemäß den Merkmalen des Anspruchs 1 sowie der Unteransprüche ist geeignet objektbasiert codierte Information, insbesondere nach dem MPEG-4 Übertragungsstandard, in einen vorgegebenen rahmenstrukturierten Übertragungsstandard, insbesondere in einen ITU-Standard, einzubinden und ermöglicht so den Transport der codierten MPEG-4 Daten. Gegenüber herkömmlichen Video-Codierverfahren, wie dem eingangs vorgestellten Videoverfahren gemäß ITU-H.263/H.261 und dem Audio-Codec gemäß G.723.1 ergeben sich insbesondere die folgenden Vorteile:
- objektbasierte Kodierung synthetischer und natürlicher visueller Objekte sowie Audio-Objekte,
- verbesserte Kodiereffizienz,
- verbesserte visuelle Fehlerrobustheit der Video-Kodierung,
- eigenes Format zur Beschreibung der Anordnung audiovisueller Objekte,
- Synchronisation unterschiedlicher audiovisueller Objekte,
- Interaktion mit audiovisuellen Objekten.

Dem erfindungsgemäßen Verfahren liegen zwei unterschiedliche Konzepte - im folgenden als **Konzept A und B** gekennzeichnet - zugrunde. Generell ist jedes der Konzepte für sich allein geeignet die gewünschte Funktionalität - Übertragung objekt-basiert codierter audio-visueller Information - sicherzustellen, jedoch kann Konzept A bei großer Objektanzahl (d.h. einer großen Anzahl von MPEG-4 Datenströmen) vorteilhaft sein. Auch eine Kombination der beiden Konzepte ist möglich. Das erfindungsgemäße Verfahren besitzt daher den großen Vorteil, daß
- alle MPEG-4 Datenströme - beispielsweise bei Verwendung einer großen Anzahl von Objekten - mittels der MPEG-4 FlexMux-Spezifikation zu einem Datenstrom paketiert werden können, der alle Informationen zum Decodieren enthält **(Konzept A)**, oder bzw. und
- eine eine bi-direktionale Kommunikation basierend auf den gesamten MPEG-4 Funktionalitäten durchgeführt werden kann, ohne daß aufwendige zusätzliche Anpassungen der MPEG-4 Daten an die Formate des Kommunikationsstandards erforderlich wären. Ermöglicht wird dies durch konsequente Ausnutzung der von dem Multimediakommunikationsstandard H.324 bereitgestellten Mechanismen **(Konzept B)**.

Weiterhin werden beim Fähigkeiten-Austausch und beim Öffnen eines Übertragungskanals die gleichen Datenstrukturen verwendet, die den zu übertragenden Datenstrom-Typen, die verwendeten Kodier-Werkzeuge und deren Parameter wie z.B. die Datenkapazität kennzeichnen.

Durch die Verwendung von Datenpaketen konstanter Länge (bei **Konzept A)** bzw. die Ausnutzung der Rahmenstruktur des in H.324 verankerten Multiplex-Standards H.223 (bei **Konzept B**) wird die Fehlerrobustheit erhöht. Die Aufsynchronisation in den Datenstrom nach einem Fehler ist einfach möglich. Eine Kapselung oder auch die Zusammenführung unterschiedlicher Systeme, z. B. Kombination von H.324 Plattform und MPEG-4 Plattform, ist einfach durchführbar.

### Zeichnungen

Anhand der weiteren Zeichnungen wird die Erfindung näher erläutert. Es zeigen:
- Figur 2a und 2b Blockschaltbilder von MPEG-4 Multimedia Systemen basierend auf einem H.324 Terminal,
- Figur 3 den Aufbau eines Flex-Mux Protokolls im Simple Mode mit konstanter Länge,
- Figur 4 den Aufbau eines Flex-Mux Protokolls im Mux Mode mit konstanter Länge,
- Figur 5 einen Adaption-Layer Rahmen gemäß ITU H.223,
- Figur 6 die Verschachtelung der Daten der logischen ITU-Kanäle,
- Figur 7 das Header Format,
- Figur 8 ein Beispiel für einen Multiplex Entry Descriptor,
- Figur 9 die Einbindung von Paketen konstanter Länge in die ITU-Adaption-Layer variabler Länge.

### Beschreibung von Ausführungebeispielen

Bevor das erfindungsgemäße Verfahren im Detail beschrieben wird, werden zum besseren Verständnis die verwendeten Standards kurz spezifiziert:
Der Standard ITU-H.324 spezifiziert ein Terminal, welches aus einem Video-Codec gemäß H.261/H.263, einem Audio-Codec gemäß G. 723, einem Multiplexer gemäß H.223 und einem Kontroll-Protokoll gemäß H.245 besteht. Der Aufbau und das Zusammenfügen der einzelnen Komponenten ist in diesem Standard beschrieben.

Der ITU-H.223 Standard spezifiziert ein paketorientiertes Multiplex-Protokoll für Multimedia-Kommunikation mit niedrigen Bitraten. Es wird für die Übertragung niedriger Bitraten zwischen zwei Multimedia-Terminals oder einem Terminal und einer Multi-Point-Einheit eingesetzt- Das Protokoll ermöglicht die Übertragung einer beliebigen Kombination von Audio-, Video- und Dateninformationen über einen einzelnen Kommunikationskanal. Das Protokoll zeichnet sich durch "Low-Delay" und niedrigem Overhead aus. Die notwendigen Protokoll-Prozeduren zur Implementierung des Multiplex-Protokolls werden im H.245 Standard spezifiziert.

Der Standard ITU-H.245 "Control Protocol for Multimedia Communication" spezifiziert die Syntax und Semantik von Terminal-Informationen und Nachrichten sowie die Prozeduren zum Kommunikationsaufbau. Die Nachrichten ermöglichen den Austausch von Terminal-Fähigkeiten/Capabilities, z. B. Terminal A signalisiert Terminal B, daß es Video-Daten decodieren kann und welche Verfahren es unterstützt.

Weiterhin ist ein Protokoll spezifiziert, was die zuverlässige Übertragung von audiovisuellen Daten mittels einer Acknowledge Nachricht erlaubt (Terminal A signalisiert Terminal B den korrekten Empfang des Datenpakets).

Der Standard ITU-H.263/H.261 Standard spezifiziert die Codierung von komprimierten Videodaten für Kanäle niedriger Bitraten.

Der G.723.1 Standard spezifiziert die Decodierung von komprimierten Audiodaten für Kanäle niedriger Bitraten.

Für die Übertragung von MPEG-4 Daten mittels des H.245 Standards sind folgende Schritte erforderlich:
**1.** Zunächst muß ein Austausch der Fähigkeiten (Capability Exchange) der kommunizierenden Terminals stattfinden, um die gegenseitige Kommunikation zu ermöglichen. Die Datenübertragung erfolgt in dem dafür vorgesehenen logischen Kanal 0 entsprechend H.245.
**2.** Des weiteren ist es erforderlich, die MPEG-4 Dekoder zu konfigurieren. Die dazu notwendigen MPEG-4 spezifischen Informationen wie der Initial Object Descriptor werden entweder mittels H.245 insbesondere dem logischen Kanal 0 oder über einen separaten logischen ITU-Kanal übertragen, insbesondere einem logischen Kanal ungleich 0 entsprechend dem ITU-H.223 Standard.
**3.** Anschließend müssen mittels des H.245 Standards die einzelnen, logischen Kanäle zur Übertragung der audiovisuellen Datenströme geöffnet werden.

### zu 1.: Austausch der Fähigkeiten (Capability Exchange)

Für den Capability Exchange ist es ausreichend, eine MPEG-4 Capability innerhalb H.245 zu definieren, die wie folgt aussehen kann:

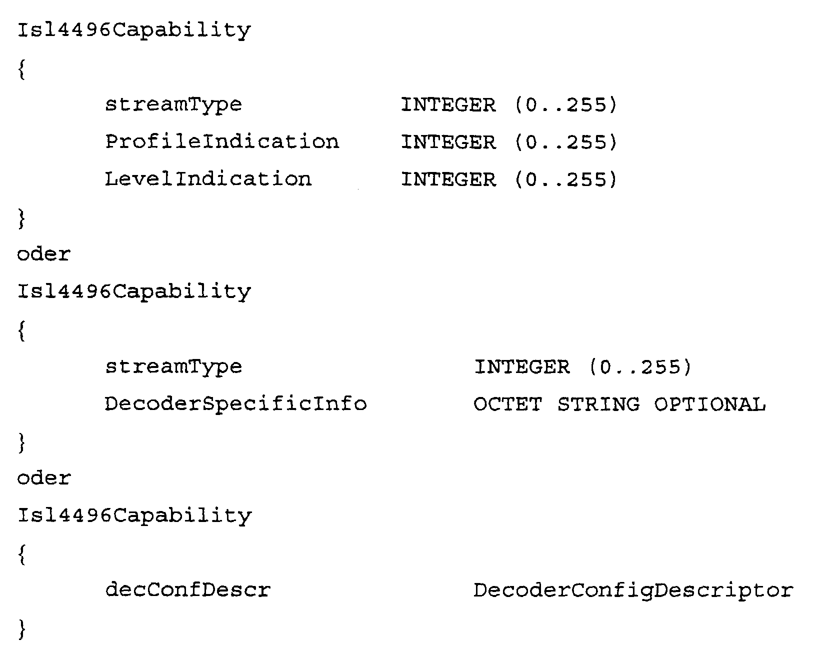

Die einzelnen Felder der obigen Datenstrukturen werden in den MPEG-4 Dokumenten (ISO/IEC 14496) näher erläutert. Der Vorteil dieser Capability Definition begründet sich in dem geringen Daten-Overhead und einem Verweis auf die Spezifikation innerhalb des MPEG-4 Standards und damit die Vermeidung eines Overheads an zusätzlichen Definitionen im H.245-Standard. Der streamType definiert den Typen (d.h. den Inhalt) des Datenstroms, der Profile Indikator definiert die Dekodier-Werkzeuge und der Level die Parameter dieser Dekodierwerkzeuge. Innerhalb MPEG-4 sind unter anderem diese Parameter enthalten mit Ausnahme der Level Indication, die noch zu spezifizieren ist von MPEG.

Die isl4496Capability dient auch dazu, bei Konzept B mittels des 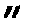 Data Type" Feldes beim Öffnen eines logischen Kanals mit der H.245 Funktion OpenLogicalChannel den in diesem Kanal übertragenen MPEG-4 Daten-Typen anzuzeigen.

### zu 2.: Konfiguration der Dekoder

Nachdem mittels des Capability Exchange die Terminalfähigkeiten definiert sind, wird die Konfiguration der Dekoder durch die Übertragung der Initial Object Descriptoren bzw. der Object Descriptoren durchgeführt. Dieses geschieht entweder mittels eines request/confirm Kommandos nach H.245, innerhalb dessen die Initial Object Descriptoren ausgetauscht werden oder durch das Öffnen eines neuen logischen ITU-Kanals, der nur den Initial Object Descriptor oder den SL-packetierten Object Descriptor Strom enthält.

### zu 3.: Öffnen der logischen Kanäle und Datenübertragung

Nach der Konfiguration werden die einzelnen ITU-Kanäle geöffnet. Allgemein gilt:

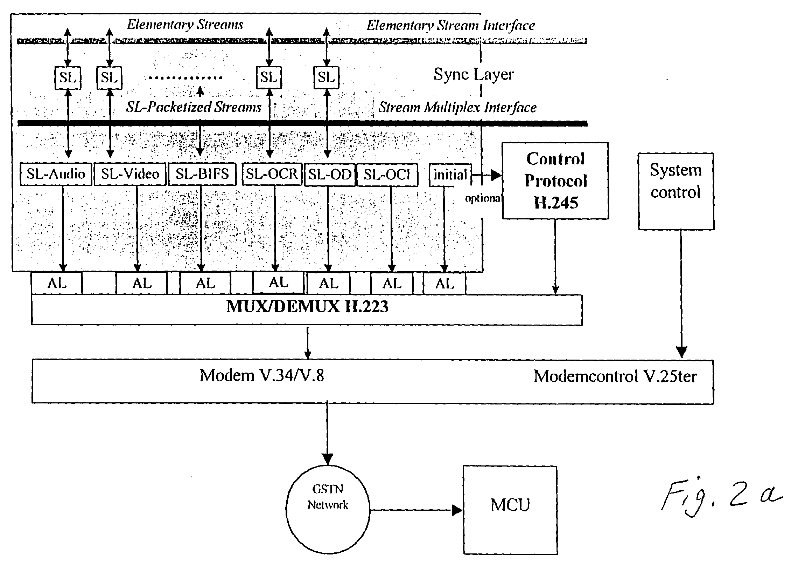

Die audiovisuellen kodierten Informationen, insbesondere gemäß MPEG-4, werden zu separaten Datenströmen aufbereitet. Ein Encoder, der einen MPEG-4 konformen Datenstom generiert, liefert an seinem Ausgang bereits mehrere dieser separaten Datenströme, insbesondere SL (Synchronisation Layer)-paketierte Datenströme. In Figur 2a und Figur 2b sind die Elementardatenströme (El. Streams) am "Elementary Stream Interface" der Sync(Synchronisation)-Layer dargestellt. Hierbei ist zu beachten, daß der Header der SL-Pakete auch zu 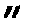 NULL" konfiguriert - also weggelassen - werden kann. Innerhalb dieses "Sync Layer" erfolgt die Paketierung der Elementardatenströme, die dann am "Stream Multiplex Interface" für die Weiterverarbeitung abgreifbar sind.

Gemäß **Konzept B** geschieht das Öffnen eines logischen Kanals mit der in H.245 definierten OpenLogicalChannel Message.

Das 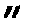 portNumber" -Feld dient beim Öffnen des jeweiligen logischen Kanals zur Signalisierung der zugeordneten Elementardatenstrom-Identifikation (ES_ID), mittels derer die Datenströme MPEG-4-seitig referenziert werden. Mit dem 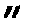 streamType" -Feld, dem hier der Wert einer Isl4496Capability zugewiesen wird (es können also die gleichen Datenstrukturen wie beim Cpability Exchange verwendet werden), wird dabei jeweils explizit der Inhalt eines logischen Kanals (d.h. der MPEG-4-Objekttyp) angegeben. Bei der eigentlichen - dann folgenden - Datenübertragung wird bei **Konzept B** jeder einzelne SL-paketierte MPEG-4 Datenstrom am 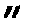 Stream Multiplex Interface" abgegriffen und in einem logischen ITU-Kanal übertragen. Die SL-paketierten MPEG-4 Datenströme werden hierzu vom H.223 AdaptationLayer als AL-SDU Pakete weiterverarbeitet und mittels des H.223 Standards gemultiplext (Ausführungsbeispiel gemäß Fig. 2a). Diese Übernahme des MPEG-4 Framing der Daten in ein Framing gemäß H.223 (SL-PDU := AL-SDU) erhöht die Fehlerrobustheit und erlaubt eine einfache Resynchronisation, falls ein Pakets fehlerhaft übertragen wurde. Zudem wird hierdurch eine ansonsten zusätzlich notwendige Adaption des MPEG-4 Datenformats an das Format des Multiplexers vermieden. Das Konzept B ermöglicht das (spätere) dynamische Hinzufügen weiterer MPEG-4 Datenstroms.

Für die Umsetzung von **Konzept A** werden die einzelnen Datenströme zu insgesamt nur einem Datenstrom mittels des MPEG-4 FlexMux gemultiplext und in insgesamt einem logischen ITU-Kanal übertragen (Ausführungsbeispiel gemäß Fig. 2b). Für diese Art der Übertragung von MPEG-4 Datenströmen mittels des FlexMux werden zusätzliche Descriptoren definiert, die den Verbindungsaufbau ermöglichen. Nur mit diesen ist die Erkennung der einzelnen MPEG-4 Datenströme möglich. Diese MPEG-4-spezifischen Datenströme werden mittels des MPEG-4 Flexmux Tools gemultiplext. Hierbei wird die Verwendung von Paketen konstanter Länge definiert, wodurch die Fehlerrobustheit erhöht wird. Die Aufsynchronisation in den Datenstrom nach einem Fehler ist so möglich.

Nachfolgend wird das **Konzept A** im Detail beschrieben.

Wie Figur 2b zeigt, können folgende logischen MPEG-4-Objekte (SL-paketierte Datenströme) mittels des MPEG-4 FlexMux-Tools in einen Übertragungsrahmen gemultiplext und in einem logischen ITU-Kanal AL1 übertragen werden:
SL-Audio,
SL-Video,
SL-OCR (Object Clock Reference),
SL-OD (Object Descriptor),
SL-OCI (Object Content Information).

In einer leichten Abwandlung von Konzept A ist es auch möglich, Daten des ausschließlich gleichen Typs (also z.B. entweder nur SL-Audio oder nur SL-Video) in einen logischen Kanal mit Hilfe des FlexMux-Tools zu multiplexen, d.h. die Gesamtheit der MPEG-4-Datenströme wiederum in mehreren (allerdings wenigeren als bei Konzept B) logischen ITU-Kanälen zu übertragen. Dieses würde u.U. eine einfachere Trennung und Dekodierung der gemultiplexten Daten im Empfänger ermöglichen. Im folgenden wird jedoch wiederum das ursprüngliche **Konzept A**, also das Multiplexing aller MPEG-Datenströme in einen logischen ITU-Kanal mittels des FlexMux-Tools betrachtet.

Das Konzept A ermöglicht (ebenso wie Konzept B) die Übertragung mehrerer MPEG-4-Datenströme des gleichen Typs, wie z.B. die Übertragung mehrerer Audioströme für einen bild-begleitenden Ton in unterschiedlichen Sprachen.

Für das Verfahren gemäß **Konzept A** ist es notwendig, **MUXCODETABLE_Entry** während der Initialisierungsphase zu übertragen, um den MPEG-4 FlexMux zu konfigurieren.

Letztendlich muß dem MPEG-4 Dekoder die vorgenommene Zuordnung der einzelnen ES-Ströme zu den zu multiplexenden Daten mitgeteilt werden. Dies wird mittels einer **Channel Map Table** (oder auch Stream Map Table genannt) erreicht.

Diese beiden Informationen sind neben den Objekt Deskriptoren für die Dekodierung notwendig.

Um die zusätzlichen Informationen **MUXCODETABLE_Entry** und **Channel Map Table** in den Initial Object Descriptor einzufügen, ist die Definition neuer Descriptoren notwendig. Diese werden in Form von Extension Descriptors in den Initial Object Descriptor eingefügt.

Class Channel Map Table Descriptor: bit(8) tag= to be defined

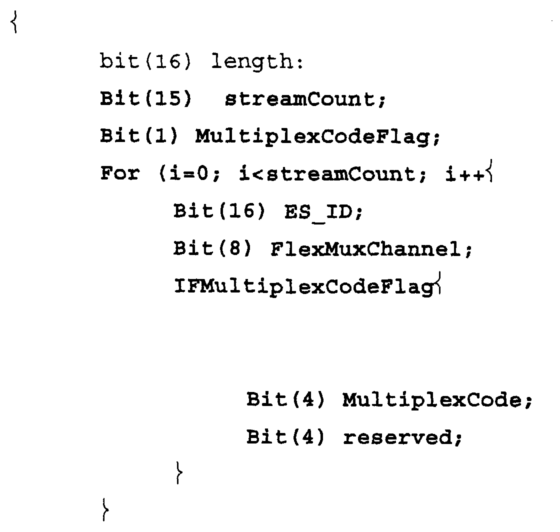

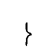

Der fettgedruckte Teil zeigt den hier neu definierten Descriptor.

Ähnlich kann auch der Aufbau eines MuxCodeTableEntryDesccriptors erfolgen:

Class MuxCodeTableEntryDescriptors: bit(8) tag= to be defined

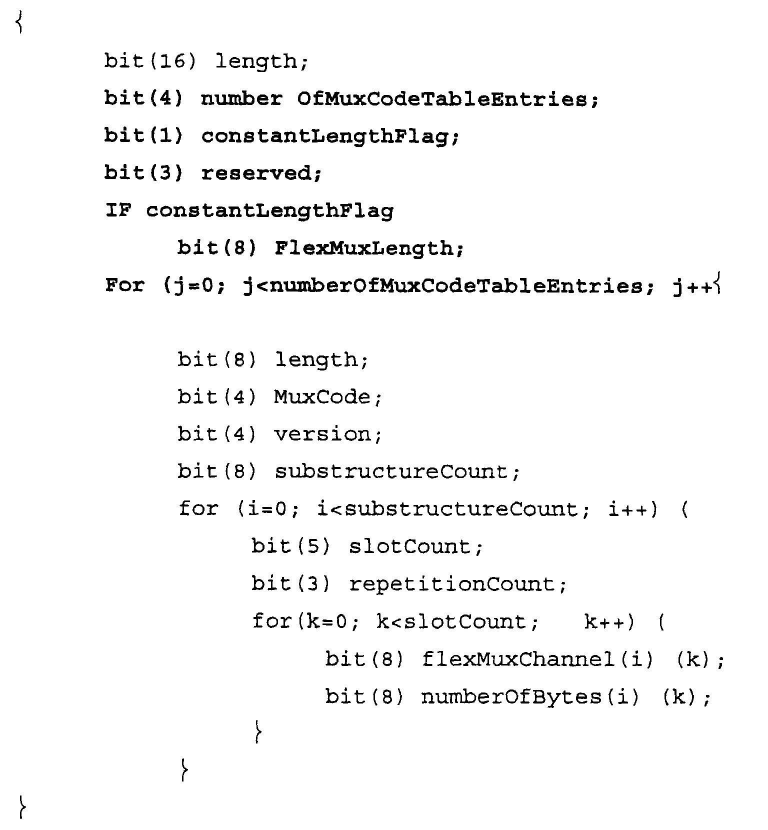

Der fettgedruckte Teil zeigt den hier neu definierten Descriptor. Das Datenfeld **numberOfMuxCodeTableEntries** ermöglicht die Übertragung der maximal 16 MuxCodeTableEntries. Mittels des **constantLengthFlag** und dem Feld **FlexMuxLenth** wird dem Empfänger signalisiert, daß die FlexMux-Pakete mit konstanter Länge mit der Paketgröße **FlexMuxLenth + 2** übertragen werden.

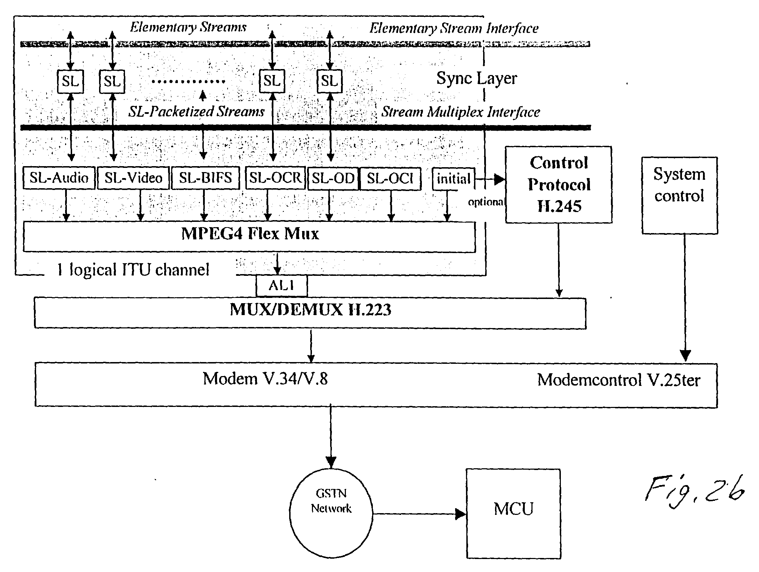

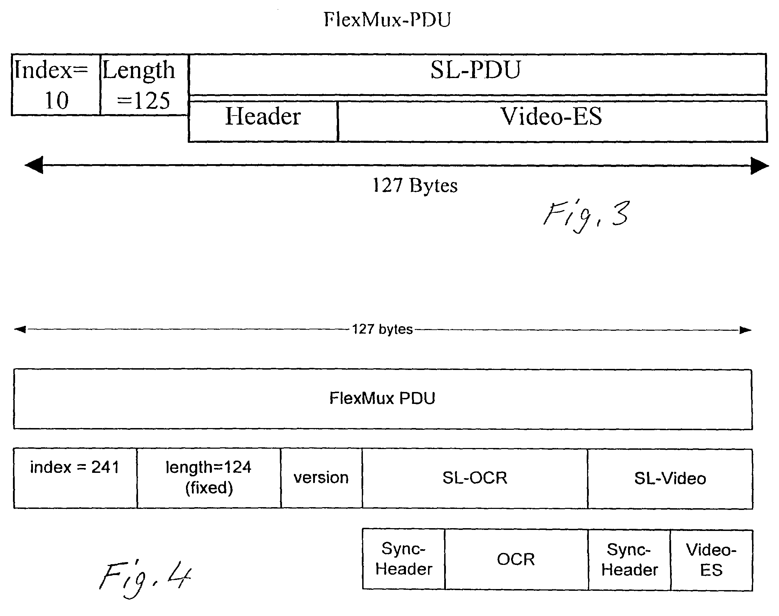

Die in MPEG-4 definierten FlexMux-Pakete werden zum einen in dem Simple Mode gemäß Fig. 3 und zum anderen in dem MuxCode gemäß Fig. 4 übertragen.

Durch Verwendung von Paketen konstanter, ungerader Länge, hier 127 Bytes, können die oberen 7 Bits des Length Felds zur Synchronisation genutzt werden.
Dieses erhöht die Fehlerrobustheit und erlaubt eine Resynchronisation, falls ein Längenfeld eines Pakets fehlerhaft ist.

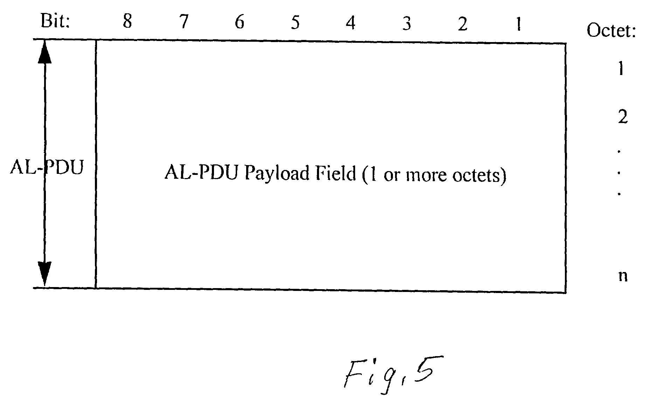

Diese FlexMux - Pakete müssen nun in einen ITU-Rahmen eingebunden werden. In Figur 5 ist ein Adaptation Layer (AL)-Rahmen gemäß ITU-H.223 gezeigt, mit einem AL-PDU (Protocol Data Unit) Payload Field. Aufgrund der variablen Länge eines FlexMux Pakets wäre das Auffinden eines neuen FlexMux Pakets nach einem Fehler im Längenfeld nicht mehr möglich. Dieses ist besonders schädlich, wenn mehrere MPEG-4 Elementarströme (z. B. BIFS, OD, und Video) in einem ITU Kanal übertragen werden.
Durch Verwendung konstanter Längen innerhalb der MPEG-4 FlexMux Pakete, nach der Erfindung, ist dies nun wiederum möglich.

Die einzelnen AL-PDU Pakete variabler Länge werden nun mittels des Multiplexers verpackt.
Der Aufbau des Multiplex Layer und die prinzipielle Einbindung des MPEG-4 FlexMux Datenstroms wird kurz erläutert.

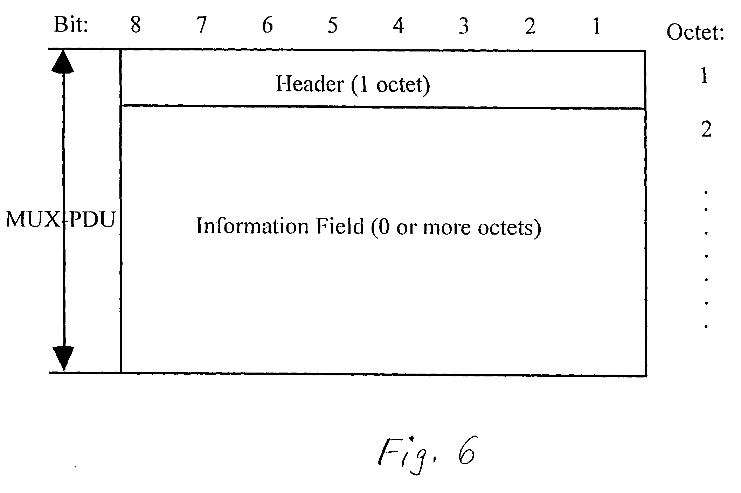

Eine MUX Protocol Data Unit (MUX-PDU) besteht aus einem Header und einem Information Field, indem die Daten der einzelnen logischen ITU Kanäle verschachtelt sind. Figur 6 zeigt den Aufbau.

Der Header besteht aus einzelnen Feldern, die in Figur 1 gezeigt sind.

Der 4 Bit große Multiplex Code zeigt auf einen über H.245 übertragenen MultiplexEntry, wovon maximal 15 verschiedene definiert werden können.

Das Header Error Control Feld ist ein 3 Bit großes CRC Feld, welches eine Fehler-Erkennung im Header zuläßt.

Das 1-Bit Packet Marker Feld markiert das Ende einer MUX-SDU eines segmetierten logischen Kanals.

Das in Figur 6 gezeigte Informations-Feld wird mittels der in H.245 übertragenen MultiplexTable konfiguriert.

Das Informations-Feld kann mit einem Closing Flag jederzeit an einer Oktett-Grenze abgeschlossen werden, jedoch darf eine MUX-SDU von einem nicht segmentierbaren Kanal nicht unterbrochen werden.

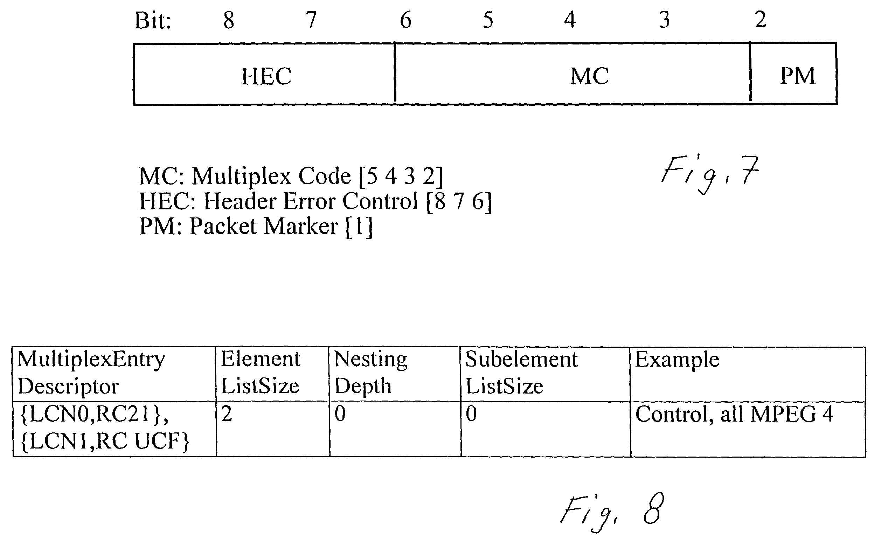

Der MultiplexEntryDescriptor konfiguriert den H.223 Multiplexer und wird in der Initialisierungsphase übertragen (Figur 8).

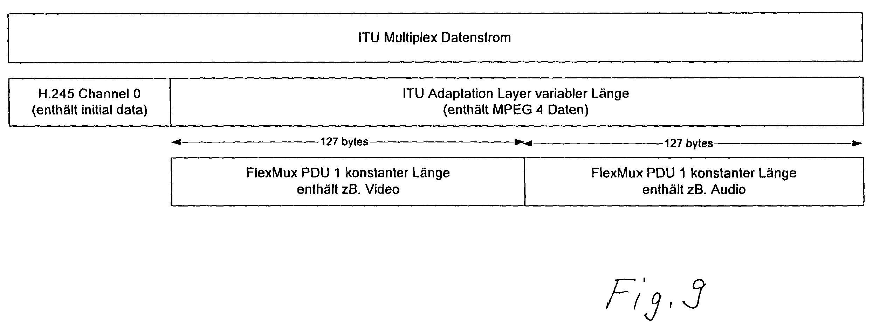

In dieser Figur bedeutet LCN: LogicalChannelNumber, RC: RepeatCount, UCF:UntilClosingFlag.
Der Vorteil wird in der Figur 9 deutlich:
wenn in einem ITU-Kanal mehrere MPEG-Daten übertragen werden und MPEG-4 Pakete variabler Länge benutzt werden, dann sind alle folgenden FlesMuxPakete nicht mehr decodierbar. Die geschickte Verwendung des Längenfelds als ein Synchronisationsmarker erlaubt die Aufsynohronisation des Empfängers.

Das sendende Terminal signalisiert dem empfangenden Terminal die Paketlänge mittels des hier definierten **MuxCodeTableEntryDescriptors,** der durch ein Flag gekennzeichnet ist, welches die Verwendung von FlexMux Paketen konstanter Länge signalisiert und weiterhin ein Feld enthält, welches die zu verwendende Länge festlegt. Hierdurch ist eine große Flexibilität verbunden mit einer großen Fehlerrobustheit gewährleistet.

Die Erfindung kann natürlich nicht nur für MPEG-4 Daten verwendet werden, sondern auch für andere audiovisuelle codierte Information, die in einen standardisierten Übertragungsrahmen einzubinden ist und deren Dekodierung einfach und fehlerrobust erfolgen soll.

Das vorgestellte Verfahren kann natürlich in senderseitigen und empfangsseitigen Endgeräten realisiert werden. Für die senderseitige Einbindung müssen entsprechende Mittel zur Aufbereitung bzw. zur Anlieferung von audiovisueller codierter Information vorgesehen sein sowie entsprechende Mittel zum Multiplexen der Datenströme, zum Austausch der Fähigkeiten und zur Signalisierung. Für die empfangsseitige Auswertung sind Mittel zur Zerlegung der gemultiplexten Datenkanäle sowie Mittel zum Austausch der Fähigkeiten und deren Auswertung und zur Auswertung der Signalisierung notwendig. Da üblicherweise im Dialogverkehr gearbeitet wird, sind Teilnehmerendgeräte sowohl für den Sende- als auch für den Empfangsbetrieb ausgerüstet.

## Patentansprüche

1. Verfahren zur Einbindung von audiovisueller codierter Information in einen vorgegebenen rahmenstrukturierten Übertragungsstandard mit folgenden Schritten:
- die audiovisuelle codierte Information wird zu separaten Datenströmen aufbereitet, bzw. wird in Form von separaten Datenströmen angeliefert,
- die einzelnen Datenströme werden in einen bzw. mehrere Datenkanal/- kanäle des rahmenstrukturierten Übertragungsstandards gemultiplext,
- die Fähigkeiten, insbesondere die Codier- und Decodierfähigkeiten, der miteinander kommunizierenden Endgeräte werden nach dem Aufbau einer Verbindung ausgetauscht,
- zur Signalisierung werden Datenstrukturen eines Kodierstandards verwendet, die Angaben über den verwendeten Datentyp, das zu benutzende Decodierwerkzeug und die Kodierungsparameter wie z.B. die Datenkapazität enthalten.

2. Verfahren nach Anspruch 1, dadurch gekennzeichnet, daß die Datenstrukturen, die beim Austausch der Fähigkeiten und beim Öffnen eines Übertragungskanals verwendet werden, gleich gewählt sind.

3. Verfahren nach Anspruch 1 oder 2, dadurch gekennzeichnet, daß beispielsweise für objektbasierte audiovisuell codierte Information mit geringer Objektanzahl die entsprechenden Datenströme mittels eines Multiplexers, insbesondere eines Multiplexers nach dem H.223 Standard, paketiert werden und in einzelnen Übertragungskanälen, insbesondere ITU-Kanälen entsprechend dem H.245 Standard, übertragen werden.

4. Verfahren nach Anspruch 3, dadurch gekennzeichnet, daß zur Zuordnung der einzelnen Pakete innerhalb der ihnen zugeordneten Übertragungskanälen, ein Datenfeld ( 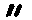 portNumber" - Feld) dient, das bei einer MPEG-4 Übertragung eine Identifikation der einzelnen Elementar-Datenströme (ES-ID) enthält.

5. Verfahren nach Anspruch 3, dadurch gekennzeichnet, daß von dem Multiplex-Verfahren das Datenformat der MPEG-4-Ausgangsdatenströme (SL-PDUs) direkt übernommen wird, so daß keine weitere Umformatierung notwendig wird.

6. Verfahren nach Anspruch 3, dadurch gekennzeichnet, daß Objektdescriptoren, insbesondere der 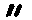 Initial Object Descriptor" nach MPEG-4, für audiovisuelle codierte Informationen in einem separaten Kanal, insbesondere einem logischen Kanal ungleich 0 entsprechend dem ITU- H.223 Standard, untergebracht werden.

7. Verfahren nach Anspruch 3, dadurch gekennzeichnet, daß für objektbasierte audiovisuell codierte Information - beispielsweise bei großer Objektanzahl - die entsprechenden Datenströme zu einem gemeinsamen Datenstrom gemultiplext werden und in einem Übertragungskanal, insbesondere in einem ITU-Kanal, übertragen werden.

8. Verfahren nach einem der Ansprüche 1, 2 oder 7, dadurch gekennzeichnet, daß neben den gemultiplexten Datenströmen im Übertragungsrahmen des rahmenstrukturierten Übertragungsstandards eine Signalisierungsinformation untergebracht wird, die darauf hinweist, daß gemultiplexte Informationspakete konstanter Länge übertragen werden, aufgrund derer eine Synchronisation, insbesondere bei fehlerhaften Datenpaketen, duchführbar ist.

9. Verfahren nach einem der Anspruch 1, 2 oder 7, dadurch gekennzeichnet, daß Objektdescriptoren, insbesondere der 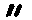 Initial Object Descriptor" nach MPEG-4, für audiovisuelle codierte Informationen in einem zusätzlichen Kanal, insbesondere dem logischen Kanal 0 entsprechend dem ITU-H.245 Standard, untergebracht werden.

10. Verfahren nach einem der Ansprüche 1, 2, 7 oder 8, dadurch gekennzeichnet, daß Zuordnungsdaten zwischen den separaten Datenströmen, insbesondere SL paketierten MPEG-4 Elementardatenströmen und den gemultiplexten Daten in dem zusätzlichen Kanal, insbesondere dem logischen Kanal 0 entsprechend dem ITU- H.245 Standard, untergebracht werden.

11. Verfahren nach einem der Ansprüche 1, 2, 7, 8 oder 9, dadurch gekennzeichnet, daß für die Signalisierungsinformation Datenfelder vorgesehen werden, welche zum einen die konstante Länge und die Paketgröße der gemultiplexten Informationspakete kennzeichnen.

12. Verfahren nach einem der Ansprüche 1, 2, oder 7 - 10, dadurch gekennzeichnet, daß als audiovisuelle codierte Information MPEG-4 Daten verwendet werden, die zu Flex-Mux-Paketen konstanter Länge aufbereitet werden, und daß diese Flex-Mux-Pakete konstanter Länge in einen Übertragungsrahmen gemultiplext werden, die eine Übertragung gemäß dem ITU-Standard H.324 ermöglicht.

13. Verfahren nach einem der Ansprüche 1 bis 12, dadurch gekennzeichnet, daß innerhalb der 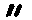 Adaptation Layer" variabler Länge gemäß ITU-Standard H.324 mehrere MPEG-4 Daten in Datenpaketen konstanter Länge untergebracht werden, wobei im Anfangsbereich dieser Datenpakete jeweils ein Längenfeld vorgesehen ist, welches als Synchronisationskennung, insbesondere zur Aufsynchronisation eines Empfängers, verwendbar ist.

14. Endgerät zur senderseitigen Einbindung von audiovisueller codierter Information in einen vorgegebenen rahmenstrukturierten Übertragungsstandard mit folgenden Merkmalen:
- Mitteln zur Aufbereitung der audiovisuellen codierten Information zu separaten Datenströmen an das Endgerät bzw. zur Anlieferung in Form von separaten Datenströmen an das Endgerät,
- Mitteln zum Multiplexen der einzelnen Datenströme in einen bzw. mehrere Datenkanal/- kanäle des rahmenstrukturierten Übertragungsstandards,
- Mitteln zum Austausch der Fähigkeiten, insbesondere der Codier- und Decodierfähigkeiten, mit weiteren Endgeräten insbesondere nach dem Aufbau einer Verbindung,
- Mitteln zur Signalisierung unter Verwendung von Datenstrukturen, die Angaben über den verwendeten Datentyp, das zu benutzende Decodierwerkzeug und die Kodierungsparameter wie z.B die Datenkapazität enthalten.

15. Endgerät zur empfangsseitigen Auswertung von audiovisueller codierter Information in einem vorgegebenen rahmenstrukturierten Übertragungsstandard mit folgenden Merkmalen:
- Mitteln zur Zerlegung eines bzw. mehrerer gemultiplexter rahmenstrukturierter Datenkanäle eines Übertragungsstandards in einzelne audiovisuelle Datenströme,
- Mitteln zum Austausch der Fähigkeiten, insbesondere der Codier- und Decodierfähigkeiten, mit weiteren Endgeräten insbesondere nach dem Aufbau einer Verbindung,
- Mitteln zur Signalisierung unter Verwendung von Datenstrukturen, die Angaben über den verwendeten Datentyp, das zu benutzende Decodierwerkzeug und die Datenkapazität enthalten.
